Europäisches Patentamt

European Patent Office

Office européen des brevets

(11) Publication number: **0 279 539**
**A1**

# EUROPEAN PATENT APPLICATION

(21) Application number: 88300716.3

(22) Date of filing: 28.01.88

(51) Int. Cl.⁴: **H02G 3/26**

(30) Priority: 06.02.87 GB 8702650

(43) Date of publication of application:
24.08.88 Bulletin 88/34

(84) Designated Contracting States:
ES FR IT

(71) Applicant: VICTAULIC PLC
P.O. Box 13 46-48 Wilbury Way
Hitchin Hertfordshire SG4 0UD(GB)

(72) Inventor: Ansell, Donald James
Sycamore Lodge Chapel Lane
Wymond Ham Leicestershire(GB)
Inventor: Boden, Thomas James
15 Digby Drive
Oakham Rutland Leicestershire(GB)

(74) Representative: Heath, Peter William Murray
FRY, HEATH & CO. Seloduct House Station
Road
Redhill Surrey RH1 1PD(GB)

(54) Improvements in or relating to retaining clips.

(57) The invention provides a clip (3) for plastic tubing comprising a body portion (4) for partially encircling and gripping the tube (1), a peg (5) or barb extending inwardly from the body portion and adapted in use to fit closely within an appropriately dimensioned bore (6) in the tube, and an outstanding clamp member (7) adapted in use when the body portion is mounted around the tube with its peg located in the bore therein, to overlie and bear upon an adjacent fixed member. The adjacent fixed member may comprise a flange (9) of a rail.

FIG.1.

## Improvements in or relating to Retaining Clips

This invention relates to retaining clips and, more particularly, to clips for retaining tubing or ducting in position in locations where vibration and/or similar disturbance of the tubing or ducting surrounds can otherwise lead to movement of the ducting.

It has been found that plastic tubing of circular or other cross-section, for example, that made of polyethylene, is very suitable because of its strength and long life to carry the various cabling associated with railway lines along and under the track. Thus, for example, in cases where it is desired that bundles of cables should cross a railway line, an appropriate length of plastic tubing of the necessary cross-section dimensions and wall thickness can easily be buried in the ballast beneath the rails so as, safely and conveniently, to transfer the cabling from one side of the track to the other.

However, although the nature of the plastics tubing concerned lends itself to such use because, as above mentioned, of its toughness and long life and general robustness, it does suffer from the disadvantage that compared to say, concrete ducting, it has a low density and is, therefore, relatively light, and because it usually has a smooth surface, its frictional grip within the ballast is also relatively low, so that under the repeated vibration and movement of the rails, there is a tendency for the tubing to rotate and/or move in an endwise direction so as to tend to become displaced under and from beneath the rails.

It is an object of the present invention to overcome or at least substantially reduce this problem.

In accordance with one aspect of the present invention there is provided a clip for plastic tubing comprising a body portion for partially encircling and gripping the tube, a peg or barb extending inwardly from the body portion and adapted in use to fit closely within an appropriately dimensioned bore in the tube, and an outstanding clamp member adapted in use when the body portion is mounted around the tube with its peg located in the bore therein, to overlie and bear upon an adjacent fixed member. The adjacent fixed member conveniently comprises a flange of a rail.

In accordance with another aspect of the present invention there is provided a clip for a plastic tubing duct adapted to underlie railway lines comprising a body portion for partially encircling and resiliently gripping the tube, a peg or barb extending radially inwardly of the body portion and adapted in use to fit closely within an appropriately dimensioned bore in the upper side of the tube, and a radially outwardly protruding clamp member adapted in use when the body portion is mounted around the tube with its peg located in the bore therein, to overlie and bear upon an adjacent rail flange.

The invention includes within its scope a plastic tubing duct incorporating a retaining clip as hereinabove defined. In practice, it may be desirable to provide a duct, arranged to pass under a rail track, with two retaining clips and appropriately disposed and located bores such that the clamps, when both clips are in position, locate over opposite side flanges of the same rail, or opposed flanges of the set of two rails.

The body portion of the retaining clip is preferably in cross-section of an arc-like configuration adapted to extend around more than half of the diameter of the tube duct such that the body portion may be sprung upon the tube duct and held in position by its own resilience.

The clamp member may be mounted on the body portion adjacent the peg. Although a plurality of pegs may be provided, we have found that, in many instances, a single peg is satisfactory for locating the clip upon the tube.

The clip may be formed of a resilient thermoplastic material such as polypropylene. By means of the invention, a clip is provided which is positively located upon the tube duct both axially and longitudinally, and which can, by means of its clamp member, locate positively with respect to the railway track, thereby preventing rotational or longitudinal movement of the tube duct under action of traffic vibrating the rail.

In order that the invention may be more readily understood, two embodiments thereof will now be described by way of example with reference to the accompanying drawings in which:-

Figure 1 is a side elevation in section of a duct provided with a retaining clip in accordance with one embodiment the invention;

Figure 2 is a sectional side elevation of a modified form of the clip of Figure 1.

Figure 3 is a plan of the clip of Figure 2; and

Figure 4 is an end elevation of the clip of Figure 2.

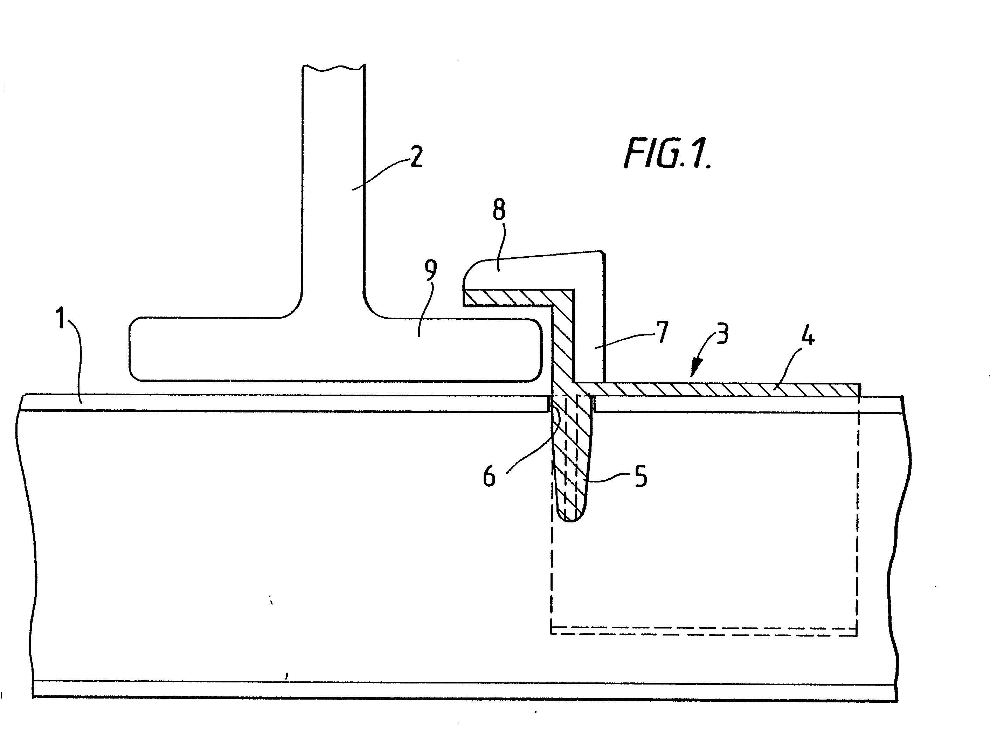

Referring now to Figure 1 it will be seen that a duct 1 passes under a railway track, one rail 2 of which is shown in part. The duct is comprised by a polyethylene tube. Such a duct, due to the vibration caused by traffic passing along the rail track, would tend, over a period of time, to rotate about its axis and/or move longitudinally and thereby become displaced despite its location within the ballast below the rails.

Spring mounted upon the tube duct is a clip 3 of polypropylene plastic comprising a part tubular body portion 4 having at one end an inwardly extending peg member 5 of cross-shaped cross-section adapted to fit closely within an appropriately shaped and dimensioned bore 6 in the upper side of the tube 1. Located radially outwardly from the peg is an angle member 7 of the clip which, as can be seen, has in its operative position, an arm 8 overlying and bearing upon the lower outwardly facing flange 9 of the rail.

In operation, the tubular duct 1 is located beneath the rail track and at least partially buried in ballast. A pair of clips 3 of the kind illustrated is then placed over the tube 1 by resilient spring action such that the peg (5 of each) fits into the bore 6 disposed adjacent each outwardly directed flange of the pair of rails. By this means, the clip 3 is firmly located, both longitudinally and radially upon the tube, and the arm 8 of the clamp 7 fits, with respect to each clip, over the appropriate portion of the rail flange 9, thereby holding the plastic duct firmly in place with respect to the rail track. Additionally it is to be noted that the clip is held in place on the duct with the aid of ballast placed over the duct.

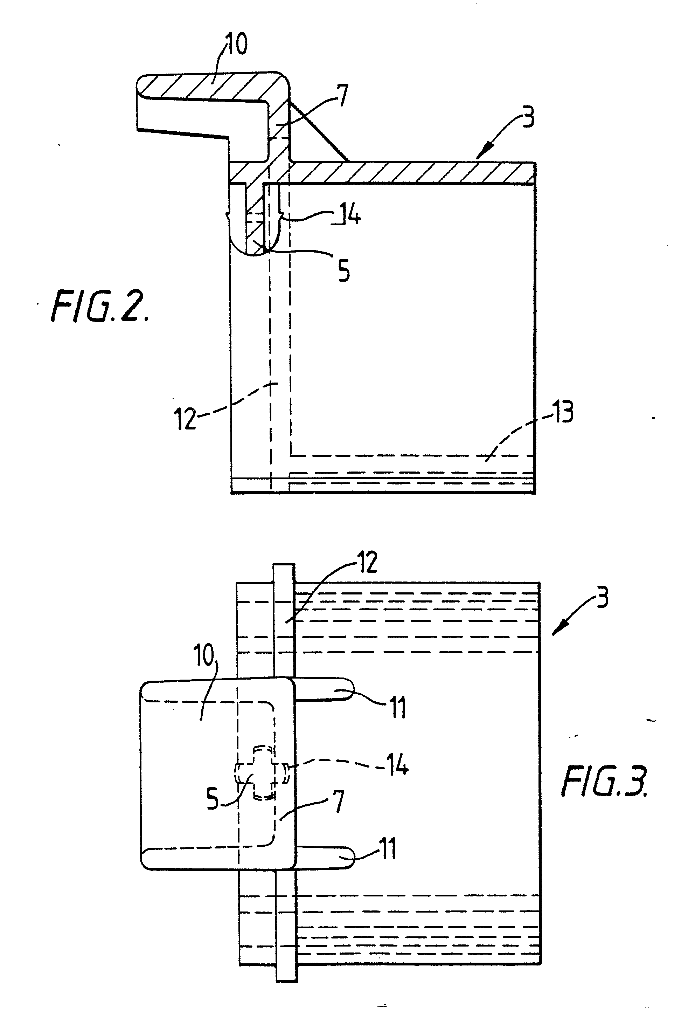

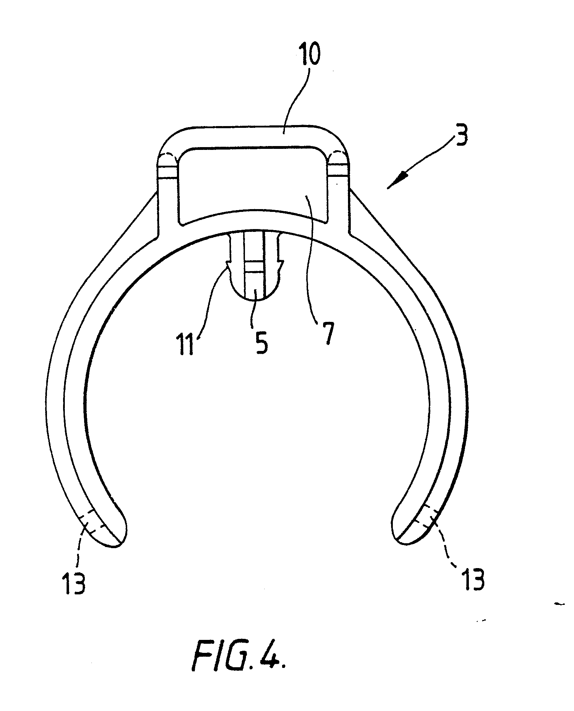

The arrangement of Figures 2, 3 and 4 is very similar to that of Figure 1 except that, in this case, the clamp member 7 has been strengthened by forming its axially extending part 10 generally as an inverted trough, by providing fillet shaped supports 11, and by providing an external peripheral rib 12 around the clip, of greater thickness where it joins the clamp 7. In addition to assisting in the support of the clamp 7, the peripheral rib 12 increases the stiffness of the clip when disposed about the tube or duct, whilst still enabling the resilient engagement of the clip on the tube or duct. A longitudinal rib 13 extends along the lower edge at each side of the clip to retain these walls parallel with each other and prevent 'flaring' of the clip body away from the clamp 7. In the same embodiment, the peg has been shortened to provide less impingement into the internal space of the duct carrying the cabling therethrough, and has been provided with barbs 14 to assist firm positive engagement of the peg 5 within the tube or duct.

## Claims

1. A clip for plastic tubing comprising a body portion for partially encircling and gripping the tube, a peg extending inwardly from the body portion and adapted in use to fit closely within an appropriately dimensioned bore in the tube, and an outstanding clamp member adapted in use when the body portion is mounted around the tube with its peg located in the bore therein, to overlie and bear upon an adjacent fixed member.

2. A clip as claimed in Claim 1 for use with a plastic tubing duct adapted to underlie railway lines, the peg being adapted in use to fit closely within an appropriately dimensioned bore in the upper side of the tube, and the clamp member being adapted in use to overlie and bear upon an adjacent rail flange.

3. A clip as claimed in Claim 1 or 2 wherein the body portion is of arc-like configuration in cross-section and adapted in use to extend around more than half of the diameter of the tube.

4. A clip as claimed in any one of the preceding claims formed of a resilient material whereby the clip may be sprung about the tube and held in position by its resilience.

5. A clip as claimed in any one of the preceding claims wherein the body portion incorporates circumferential and longitudinal ribs to increase its rigidity.

6. A clip as claimed in any one of the preceding claims wherein the clamp member is supported from the body portion with the assistance of ribs.

7. A clip as claimed in any one of the preceding claims wherein the clamp member incorporates a longitudinal portion extending beyond the body portion, the longitudinal portion having a generally inverted trough cross-section.

8. A clip as claimed in any one of the preceding claims wherein the peg is provided with barbs to aid, in use, its location within the bore in the tube.

9. A clip as claimed in any one of the preceding claims formed of thermoplastics material.

10. A plastic ducting tube incorporating at least one retaining clip as claimed in any one of the preceding claims.

FIG.1.

0 279 539

FIG.2.

FIG.3.

FIG.4.

European Patent
Office

**EUROPEAN SEARCH REPORT**

Application Number

EP 88 30 0716

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 344 667 (HERMANN LANZ)<br>* figures 2,4,7 *<br>--- | 1-3 | H 02 G 3/26 |
| A | DE-A-3 014 697 (SIEMENS)<br>* figure 1 *<br>--- | 1-3 | |
| A | DE-U-1 946 525 (DITTRICH et al.)<br>* figure 5 *<br>--- | 1,3 | |
| A | DE-U-7 614 128 (HILTI)<br>* figure 1 *<br>--- | 1-3 | |
| A | DE-U-8 025 320 (Fa. A. RAYMOND)<br>* figure 2 *<br>--- | 1-3 | |
| A | US-A-4 114 846 (PETERSEN)<br>* figure 1 *<br>----- | 1-3 | |

TECHNICAL FIELDS
SEARCHED (Int. Cl.4)

H 02 G  3/26
H 02 G  3/24
F 16 B  7/00

The present search report has been drawn up for all claims

| Place of search | Date of completion of the search | Examiner |
|---|---|---|
| BERLIN | 19-05-1988 | ZAPP E |